# EUROPÄISCHE PATENTSCHRIFT

(11) **EP 2 345 568 B1**
(45) Veröffentlichungstag und Bekanntmachung des Hinweises auf die Patenterteilung: **31.10.2012**
(21) Anmeldenummer: 11150689.5
(22) Anmeldetag: 12.01.2011
(51) Int. Cl.: B62D 5/04, F16H 55/24, F16H 1/16

(54) **Schraubradgetriebe für eine Lenkung eines Kraftfahrzeugs**
Screw gearing for the steering of a motor vehicle
Engrenage hypoïde pour une direction d'un véhicule automobile

(30) Priorität: 13.01.2010 DE 102010000845
(43) Veröffentlichungstag der Anmeldung: 20.07.2011
(73) Patentinhaber: ZF Lenksysteme GmbH, 73527 Schwäbisch Gmünd (DE)
(72) Erfinder: Grau, Marco, 73527, Schwäbisch Gmünd (DE); Füchsel, Dennis, 73527, Schwäbisch Gmünd (DE); Kneer, Ekkehard, 73240 Wendlingen (DE); Hafermalz, Jens, 73116, Wäschenbeuren (DE); Kuhlen, Arne, 73614, Schorndorf (DE)

(56) Entgegenhaltungen:
- DE-A1- 3 744 274
- DE-A1- 10 123 767
- DE-A1- 10 161 715
- JP-A- 2002 067 991
- US-A1- 2005 150 372
- US-B1- 6 408 708

## Beschreibung

Die Erfindung betrifft ein Schraubradgetriebe, insbesondere ein Schneckengetriebe, gemäß dem Oberbegriff des Anspruchs 1. Die Erfindung betrifft ferner eine elektrische Hilfskraftlenkung mit einem Schraubradgetriebe gemäß Anspruch 10.

Aus der DE 101 61 715 A1 ist ein Schraubradgetriebe in der Ausgestaltung eines Schneckengetriebes für den Einsatz in einer elektrischen Hilfskraftlenkung bekannt.

Das in der DE 101 61 715 A1 beschriebene Schneckengetriebe ist in einem Gehäuse angeordnet und weist eine Schnecke sowie ein Schneckenrad auf. Die Schnecke ist mittels einer Kupplung mit einer Antriebswelle eines elektrischen Antriebsmotors verbunden. Bei der dort gezeigten Konstruktion ist die Schnecke senkrecht zur Drehachse schwenkbar und in einem Schwenk- bzw. Pendellager gelagert, wodurch das Verzahnungsspiel während der gesamten Lebensdauer des Getriebes konstant gehalten werden kann. Hierzu wird die Schnecke radial mit einer Vorspannungskraft beaufschlagt und permanent gegen die Verzahnung des Schneckenrads (bzw. des Schraubrads) gedrückt. Es hat sich bei solchen Konstruktionen gezeigt, dass Drehrichtungswechsel bzw. Lastwechsel im Getriebe zusammen mit einem vorhandenen Zahnflankenspiel dazu führen können, dass die Zahnflanken des Schraubritzels bzw. der Schnecke mit den Zahnflanken des Schraubrads bzw. des Schneckenrads aufeinander prallen und schlagende Geräusche verursachen. Trotzdem sollte bei der Montage kein zu geringes Zahnflankenspiel eingestellt werden, da dies negativen Einfluss auf den Wirkungsgrad sowie den Verschleiß des Getriebes haben kann. Außerdem können dadurch die Rücklaufeigenschaften einer Hilfskraftlenkung verschlechtert werden, was wiederum das Lenkgefühl beim Fahrer verschlechtert.

Die maximale Vorspannung, mit der die Schnecke in das Schneckenrad gedrückt werden kann, ist begrenzt, da es ansonsten zu einer Verklemmung des Schneckenradgetriebes kommen würde.

Aus der US 2005/150372 A1 ist eine gattungsgemäßes Anpressvorrichtung, insbesondere zum Aneinanderpressen eines ersten Getriebegliedes und eines zweiten Getriebegliedes in einem Wälzkurvengetriebe eines Lenksystems, mit einem Gestell und einem Druckstück, welches an dem Gestell entlang einer Achse verschiebbar gelagert ist, wobei ein Federungselement auf das Druckstück wirkt, wobei das Federungselement aus Wälzkörpern gebildet ist, die etwa quer zu der Achse des Druckstücks federbelastet sind und sich an Schrägflächen zwischen dem Druckstück und einem Gestellbauteil abstützen.

Die bei elektrischen Lenksystemen eingesetzten Schraubräder- bzw. Schneckenräder sind häufig aus Kunststoff gefertigt. Über die Gebrauchsdauer unterliegen diese Kunststoffteile einem Setzen bzw. einem Verschleiß. Damit die Anfederung der Schnecken gegen das Schneckenrad über die gesamte Gebrauchsdauer gewährleistet ist, wird bei den aus dem allgemeinen Stand der Technik bekannten Schraubrad- bzw. Schneckengetrieben im Neuzustand eine sehr große Anfederkraft aufgebracht, die sich im Laufe der Gebrauchsdauer durch eine Verzahnungsspielzunahme verringert. Dies führt im Neuzustand zu Reibungserhöhungen und somit zu Wirkungsgradnachteilen im Getriebe.

Zum weiteren Stand der Technik wird auf die DE 10 2008 000 506 A1 verwiesen.

Der vorliegenden Erfindung liegt die Aufgabe zugrunde, die vorgenannten Nachteile des Standes der Technik zu lösen, insbesondere eine einfache und kostengünstig zu realisierende Lösung zu schaffen, bei der die Reibung im Getriebe minimiert wird, ein verbesserter Wirkungsgrad erreicht werden kann, die Anfederkraft über die Gebrauchsdauer möglichst konstant ist und eine ungewollte Geräuschentwicklung im Getriebe weitgehend reduziert wird.

Diese Aufgabe wird erfindungsgemäß durch Anspruch 1 gelöst.

Eine vorteilhafte elektrische Hilfskraftlenkung für Kraftfahrzeuge ergibt sich aus Anspruch 10.

Die erfindungsgemäße Lösung führt zu einer Reibungsminimierung im Getriebe und erhöht den Wirkungsgrad, da eine kontinuierliche Anfederung mit nahezu gleichbleibender Anfederkraft während der gesamten Gebrauchsdauer erreicht wird. Es ist nicht notwendig, dass im Neuzustand eine sehr große Anfederkraft aufgebracht wird. Durch die kontinuierliche Anfederung mit einer nahezu gleichbleibenden Anfederkraft werden zudem Klappergeräusche bzw. störende Geräusche über die gesamte Gebrauchsdauer vermieden bzw. weitgehend reduziert. Aufgrund des einfachen Aufbaus der erfindungsgemäßen Lösung werden die Anforderungen an die Montage reduziert. Hierbei ist es von besonderem Vorteil, dass montageseitig keine Einstellung der Anfederung des Schraubritzels bzw. der Schnecke erforderlich ist, da sich die notwendige Anfederung durch die erfindungsgemäße Lösung selbständig einstellt.

Die erfindungsgemäße Lösung erhöht die Robustheit des Schraubradgetriebes und somit der gesamten Hilfskraftlenkung. Aufgrund der sich durch die Erfindung ergebenden selbsttätigen Kompensation von Achsabstandsänderungen sind nur noch geringe Anfederungskräfte erforderlich.

Die erfindungsgemäße Lösung ermöglicht eine Toleranz-, Verschleiß- und Temperaturkompensation im Verzahnungseingriff zwischen dem Schraubritzel und dem Schraubrad über die gesamte Lebensdauer.

Durch die erfindungsgemäße Lösung wird die Funktion "Realisierung des Grundspiels", um insbesondere Temperaturausdehnungen sowie Rundlauftoleranzen zu kompensieren, und die Funktion "Realisierung der Nachstellung", um insbesondere ein Nachstellen zum Beispiel aufgrund von Setzen oder Verschleiß in den Verzahnungskomponenten zu ermöglichen, in besonders vorteilhafter Weise voneinander getrennt.

Das erfindungsgemäße Schraubradgetriebe für eine Lenkung eines Kraftfahrzeugs, vorzugsweise für eine elektrische Lenkung, insbesondere eine elektrische Hilfskraftlenkung eines Kraftfahrzeugs, weist ein Schraubritzel auf, welches in ein Schraubrad eingreift. Vorgesehen ist dabei eine Vorspannungseinrichtung mit einem vorgespannten Druckstück, welche das Schraubritzel in eine Verzahnung des Schraubrads drückt. Die Vorspannungseinrichtung weist dabei ein Gehäuseteil auf, in dem ein Nachstellglied axial verschiebbar aufgenommen ist. Das Druckstück ist zu dem Nachstellglied axial vorgespannt beweglich.

Das Nachstellglied weist einen Abschnitt mit einem sich verjüngenden Querschnitt auf, wobei sich der Abschnitt in eine von dem Druckstück abgewandte Richtung verjüngt. Dadurch kann eine schräg verlaufende Anlage ausgebildet werden, die in Richtung auf das Drückstück ansteigt, vorzugsweise bis die schräg verlaufende Anlagefläche die Innenwandung des Gehäuseteils kontaktiert.

Zwischen dem sich verjüngenden Abschnitt des Nachstellglieds und dem Gehäuseteil, vorzugsweise dem Boden des Gehäuseteils, ist eine Nachstellfeder angeordnet, die das Nachstellglied axial in Richtung auf das Druckstück mit einer Kraft beaufschlagt. Ferner ist ein Kugelkäfig oder eine Einrichtung mit vergleichbaren Roll- oder Gleiteigenschaften vorgesehen, welcher an dem sich verjüngenden Abschnitt des Nachstellglieds und einer Innenwandung des Gehäuseteils anliegt. Das Nachstellglied stützt sich dabei über den Kugelkäfig (oder die vergleichbare Einrichtung) im Gehäuseteil derart ab, dass eine Bewegung des Nachstellglieds in eine von dem Druckstück abgewandte Richtung gehemmt ist. Dadurch wird eine Selbsthemmung realisiert.

Die Aufgabe der Vorspannungseinrichtung ist es, das Schraubritzel in allen Betriebszuständen mit einer genau definierten Kraft in Richtung Schraubrad zu beaufschlagen. Die Vorspannungseinrichtung beaufschlagt das Schraubritzel hierzu vorzugsweise mit einer radial wirkenden Kraft. Die Beaufschlagung mit einer möglichst genau definierten Kraft ist vorteilhaft, um einerseits einen möglichst guten Wirkungsgrad für das Getriebe zu erzielen und andererseits die Belastung der Verzahnung des Getriebes gering zu halten. Die Vorspannungseinrichtung soll dabei vorzugsweise verschiedene Einflussfaktoren kompensieren, welche fertigungsbedingt vorhanden sind oder während des Betriebs des Schraubradgetriebes auftreten. Hierzu ist vorzugsweise ein gewisses Grundspiel durch die Vorspannungseinrichtung zu realisieren, um eine Temperaturausdehnung sowie Rundlauftoleranzen der Komponenten des Schraubradgetriebes ausgleichen zu können. Innerhalb dieses Grundspiels sollte die Druckkraft der Vorspannungseinrichtung eine genau definierte Untergrenze sowie eine definierte Obergrenze nicht unter- bzw. überschreiten.

Das Grundspiel wird erfindungsgemäß durch das Druckstück realisiert, welches zu dem Nachstellglied vorgespannt und axial beweglich ist.

Des weiteren soll die Vorspannungseinrichtung den Verschleiß des Schraubradgetriebes sowie speziell das Setzen des Zahnkranzes, insbesondere eines Kunststoffzahnkranzes des Schraubrads sowie gegebenenfalls weitere Bauteiltoleranzen automatisch kompensieren können.

Um eine einfache Nachstellung zu ermöglich, ist es von Vorteil, wenn ein Ende des Schraubritzels in einem Loslager gelagert ist. Eine geeignete Ausgestaltung eines Loslagers ergibt sich beispielsweise aus der DE 10 2005 035 020 A1 und der DE 10 2007 055 814 A1. Vorzugsweise ist das Loslager dabei in einer Lagerbuchse bzw. einer Schwenkbuchse radial so fixiert, dass das Schraubritzel in Richtung des Schraubrads verschwenkbar ist.

Damit das Lager des Schraubritzels durch die Vorspannungseinrichtung entsprechend radial bewegt werden kann, ist auch die Ausbildung einer einfach vorstellbaren und deshalb nicht näher dargestellten Nut oder eines Langlochs denkbar. Möglich ist außerdem der Einsatz eines Schwenk- oder Pendellagers.

Zur Lagerung des Schraubritzels ist vorzugsweise ein zweites Lager vorgesehen, welches das Schraubritzel vorzugsweise am anderen Ende lagert. Hierbei ist der Einsatz eines Festlagers von Vorteil, welches vorzugsweise einen kleinen Schwenkwinkel zulässt, so dass die durch die Vorspannungseinrichtung bewirkte Schwenkbewegung des Schraubritzels nicht behindert wird. Die festlagerseitige Lagerung des Schraubritzels erfolgt vorzugsweise durch ein Wälzlager.

Vorzugsweise ist auch auf der Loslagerseite ein Wälzlager vorgesehen. Hierbei kann vorgesehen sein, dass der Außenring des Wälzlagers in einer vorstehend beschriebenen Lagerbuchse oder einer Schwenkbuchse radial fixiert ist.

Von Vorteil ist es, wenn die Vorspannungseinrichtung das Schraubritzel über das Loslager in die Verzahnung des Schraubrads drückt.

Ferner ist es von Vorteil, wenn das Druckstück vorgespannt und axial verschieblich im Nachstellglied gelagert ist. Die Vorspannung des Druckstücks kann durch ein Elastomer oder eine Druckfeder oder ähnliche Maßnahmen erfolgen. Eine Druckfeder hat sich als besonders geeignet herausgestellt, das Grundspiel der sich im Eingriff befindlichen Teile zueinander zu realisieren. Die Druckfeder, die das Druckstück vorspannt, dient dabei zum Ausgleich insbesondere von Rundlaufabweichungen und Temperaturausdehnungen bzw. kann hochdynamische Anteile des Verzahnungsspiels zwischen dem Schraubritzel und dem Schraubrad ausgleichen.

Grundsätzlich ist es möglich, dass das Druckstück auf beliebige Art und Weise zu dem Nachstellglied vorgespannt und axial beweglich ist. Es hat sich jedoch als vorteilhaft herausgestellt, wenn das Druckstück vorgespannt und axial verschieblich unmittelbar im Nachstellglied gelagert ist.

Von Vorteil ist es, wenn das Nachstellglied als Kegelbolzen ausgebildet ist. Durch eine Ausbildung des Nachstellglieds als Kegelbolzen lässt sich der Abschnitt mit dem sich verjüngenden Querschnitt bzw. die schräg verlaufende Anlagefläche besonders einfach realisieren. Zudem lässt sich ein Kegelbolzen mit bekannten Maßnahmen einfach und kostengünstig mit der erforderlichen Bauteilgenauigkeit herstellen.

Es ist ausreichend, wenn der Kegelbolzen nur über ein Teilstück seiner Länge einen sich verjüngenden Abschnitt aufweist. Es hat sich sogar als besonders geeignet herausgestellt, wenn insbesondere ein von dem Druckstück abgewandtes Endstück des Kegelbolzens einen konstanten Querschnitt aufweist. Dies vereinfacht die Lagerung des Kegelbolzens in dem Gehäuseteil und vereinfacht zudem das Anbringen der Nachstellfeder, die den Kegelbolzen vorzugsweise außenseitig umfasst.

Von Vorteil ist es, wenn der Kegelbolzen (oder allgemein das Nachstellglied) eine vorzugsweise ringförmige Verlängerung zur axialen Führung des Druckstücks aufweist. Die Verlängerung ist dabei vorzugsweise an dem Ende des Kegelbolzens ausgebildet, der dem Schraubritzel zugewandt ist. Die Verlängerung erstreckt sich vorzugsweise koaxial zu der Achse des Kegelbolzens (bzw. allgemein des Nachstellglieds). Die Verlängerung kann zur axialen Führung des Druckstücks und/oder zur Aufnahme der Druckfeder eingesetzt werden. Vorzugsweise wird das Druckstück in der Verlängerung geführt, wobei zwischen den einander zugewandten Stirnflächen des Kegelbolzens und des Druckstücks die Druckfeder eingespannt ist. Durch bekannte Maßnahmen kann dabei eine Verliersicherung realisiert werden, so dass sichergestellt ist, dass das Druckstück durch die Druckfeder vor der endgültigen Montage nicht aus der Verlängerung ausgeworfen wird. Eine derartige Sicherung kann beispielsweise durch ein Verprägen der Verlängerung nach Einsetzen des Druckstücks erfolgen.

Von Vorteil ist es, wenn der Kegelbolzen (bzw. allgemein das Nachstellglied) und das Druckstück einen Endanschlag zur Wegbegrenzung des Druckstücks ausbilden. Der Endanschlag dient dazu, ein Zurückweichen des Druckstücks in eine von dem Schraubritzel abgewandte Richtung zu begrenzen. In einer konstruktiven Ausgestaltung der Erfindung kann dabei vorgesehen sein, dass der Endanschlag ein elastisches Dämpferelement aufweist. Das elastische Dämpferelement kann dabei an einer geeigneten Stelle des Druckstücks und/oder an einer geeigneten Stelle des Kegelbolzens ausgebildet sein.

Zur Realisierung des Endanschlags eignet es sich in besonderer Weise, wenn das Druckstück einen Bund aufweist, der an einer ringförmigen Stirnfläche der ringförmigen Verlängerung, welche das Druckstück führt, anschlägt.

Vorzugsweise sind das Druckstück, die Druckstückfeder, das Nachstellglied (bzw. der Kegelbolzen), der Kugelkäfig und die Nachstellfeder in dieser Reihenfolge ausgehend von dem Schraubritzel axial hintereinander angeordnet, wobei die Federelemente eine axiale Kraft in Richtung auf das Schraubritzel ausüben, so dass das Schraubritzel radial mit einer in Richtung auf das Schraubrad wirkenden Kraft belastet wird. Der Kugelkäfig und die Nachstellfeder umfassen das Nachstellglied (Kegelbolzen) außenseitig zumindest teilweise.

Von Vorteil ist es, wenn eine Transportsicherung vorgesehen ist, durch welche die Vorspannung der Nachstellfeder fixierbar ist. Von Vorteil ist es dabei, wenn die Transportsicherung eine Bewegung des Kegelbolzens (bzw. allgemein des Nachstellglieds) in dem Gehäuseteil unterbindet, wodurch sich auch die zwischen dem Gehäuseteil und dem Kegelbolzen eingespannte Nachstellfeder nicht bewegen kann.

Von Vorteil ist es, wenn die Transportsicherung einen Stift aufweist, der in eine den Kegelbolzen und das Gehäuseteil durchdringende Bohrung eingreift. Es kann dabei ausreichend sein, wenn die Bohrung einen Teil des Gehäuseteils bzw. einen Teil des Kegelbolzens durchdringt. Vorzugsweise durchdringt die Bohrung den Kegelbolzen vollständig. Dabei kann die stiftförmige Transportsicherung vorzugsweise an einem Ende des Gehäuseteils durch eine entsprechende mit der Bohrung im Kegelbolzen fluchtende Bohrung eingeschoben werden. Vorzugsweise weist das Gehäuseteil dabei an einer von der Eintrittsstelle abgewandten Austrittsstelle der Bohrung des Kegelbolzens eine damit fluchtende Sackbohrung auf, so dass die Transportsicherung definiert, vorzugsweise bis zum Ende der Sackbohrung, eingeschoben werden kann.

Von Vorteil ist es, wenn das Schraubradgetriebe als Schneckengetriebe ausgebildet ist, wobei das Schraubrad als Schneckenrad und das Schraubritzel als Schnecke ausgebildet ist und wobei die Schnecke mit dem Schneckenrad in Eingriff steht.

Das Druckstück ist vorzugsweise als Druckbolzen ausgebildet. Bei der Nachstellfeder handelt es sich vorzugsweise um eine Druckfeder. Das das Nachstellglied aufnehmende Gehäuseteil ist vorzugsweise als Stutzen ausgebildet, welcher eine Umfangswandung und ein Bodenteil aufweist.

Ferner ist es von Vorteil, wenn eine elektrische Hilfskraftlenkung für Kraftfahrzeuge mit einem Schraubradgetriebe bzw. einem Schneckenradgetriebe realisiert wird, das eines oder mehrere Merkmale des vorstehend beschriebenen Schraubradgetriebes bzw. Schneckengetriebes aufweist.

Vorteilhafte Ausgestaltungen ergeben sich aus den weiteren abhängigen Ansprüchen. Nachfolgend ist ein Ausführungsbeispiel der Erfindung anhand der Zeichnung prinzipmäßig dargestellt.

Es zeigt:
Fig. 1 einen prinzipmäßigen Aufbau eines Schraubradgetriebes mit einer erfindungsgemäßen Vorspannungseinrichtung;
Fig. 2 einen Schnitt durch eine erfindungsgemäße Vorspannungseinrichtung, welche durch eine Transportsicherung gesichert ist;
Fig. 3 einen Schnitt nach der Linie 111-111 der Fig. 2;
Fig. 4 einen Schnitt durch eine erfindungsgemäße Vorspannungseinrichtung nach Fig. 2 ohne eine Transportsicherung;
Fig. 5 einen Schnitt gemäß der Linie V-V der Fig. 4.

Der grundsätzliche Aufbau eines Schraubradgetriebes bzw. eines Schneckengetriebes, insbesondere auch für dessen Einsatz in einer elektrischen Hilfskraftlenkung für Kraftfahrzeuge, ist aus dem allgemeinen Stand der Technik hinlänglich bekannt, wozu beispielsweise auf die DE 101 61 715 A1 und die DE 10 2008 000 506 A1 verwiesen wird, weshalb nachfolgend nur die für die Erfindung wesentlichen Merkmale näher beschrieben werden. Hinsichtlich einer vorteilhaften Gestaltung eines Loslagers wird beispielsweise auf die in der DE 10 2007 055 814 A1 und die in der DE 10 2005 035 020 A1 beschriebenen Lösungen verwiesen.

Im Rahmen der Erfindung und des nachfolgend dargestellten Ausführungsbeispiels soll durch die Offenbarung der Erfindung anhand eines Schraubradgetriebes analog auch ein Schneckengetriebe als offenbart angesehen werden. Dabei entspricht das Schraubritzel der Schnecke und das Schraubrad dem Schneckenrad.

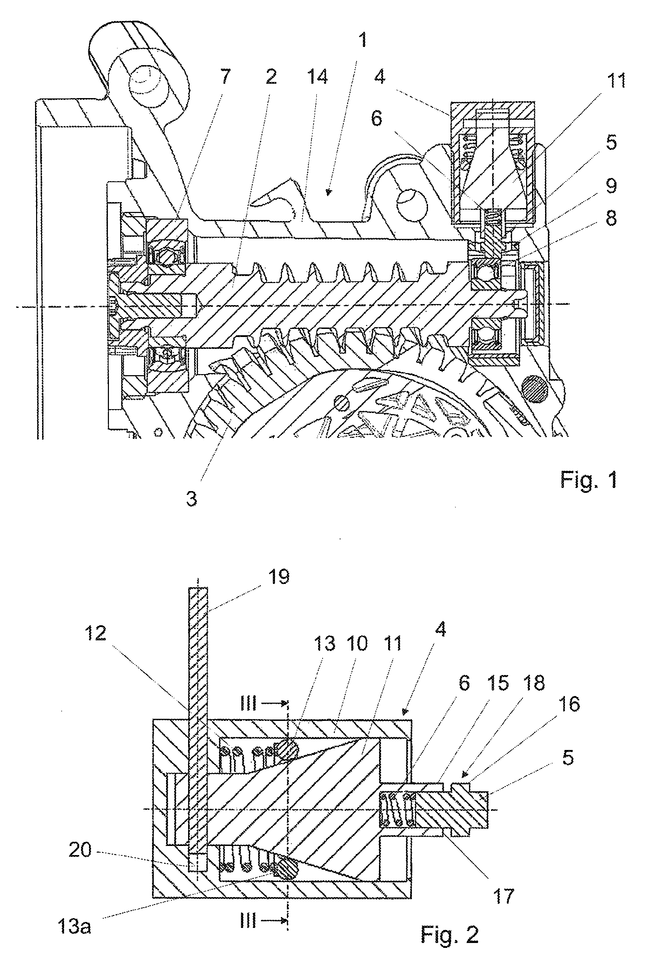

Fig. 1 zeigt ein Schraubradgetriebe 1 einer nicht näher dargestellte Lenkung, insbesondere einer elektrischen Hilfskraftlenkung eines Kraftfahrzeugs. Das Schraubradgetriebe 1 weist dabei ein Schraubritzel 2 auf, welches in ein Schraubrad 3 eingreift. Das Schraubrad 3 ist im Ausführungsbeispiel aus Kunststoff gebildet. Vorgesehen ist eine Vorspannungseinrichtung 4, welche mit einem vorgespannten Druckstück 5 versehen ist. Das Druckstück ist im Ausführungsbeispiel als Druckbolzen 5 ausgebildet. Der Druckbolzen 5 ist durch eine Druckfeder 6 vorgespannt und drückt das Schraubritzel 2 in eine Verzahnung des Schraubrads 3.

Die Lagerung des Schraubritzels 2 erfolgt festlagerseitig durch ein Wälzlager 7, welches einen kleinen Schwenkwinkel zulässt. Das Schraubritzel 2 kann an diesem Ende über eine Kupplung mit einer Antriebswelle eines elektrischen Antriebsmotors verbunden sein. Das andere Ende des Schraubritzels 2 ist in einem Loslager 8 gelagert. Im Ausführungsbeispiel ist das Loslager 8 ebenfalls durch ein Wälzlager realisiert. Der Außenring des Loslagers 8 wird in einer Lagerbuchse 9 radial fixiert. Die Lagerbuchse 9 ist vorzugsweise in Richtung des Schraubrads 3 verschwenkbar.

Das Schraubritzel 2 wird über das Loslager 8 durch die Vorspannungseinrichtung 4 mit einer bestimmten Kraft in die Verzahnung des Schraubrads 3 gedrückt.

Wie sich aus den Figuren 2 bis 5 ergibt, weist die Vorspannungseinrichtung 4 ein Gehäuseteil 10, ein Nachstellglied 11, eine Nachstellfeder 12, einen Kugelkäfig 13 sowie die bereits beschriebene Druckfeder 6 für das Grundspiel und den Druckbolzen 5 auf. Das Gehäuseteil ist im Ausführungsbeispiel als Stutzen 10 ausgebildet. Das Nachstellglied ist im Ausführungsbeispiel als Kegelbolzen 11 ausgebildet und die Nachstellfeder 12 erfüllt die Funktion einer Druckfeder. Anstelle des Kugelkäfigs 13 kann auch eine Einrichtung mit vergleichbaren Roll- bzw. Gleiteigenschaften eingesetzt werden.

Der Druckbolzen 5 ist axial verschieblich im Kegelbolzen 11 gelagert und wird von der Druckfeder 6 mit einer definierten Kraft beaufschlagt.

Der Kegelbolzen 11 stützt sich über den Kugelkäfig 13 im Stutzen 10 ab.

Im Ausführungsbeispiel ist vorgesehen, dass die Vorspannungseinrichtung 4, vorzugsweise der Stutzen 10, mit einem in Fig. 1 dargestellten Gehäuse 14, vorzugsweise einem Servogehäuse, verschraubt ist.

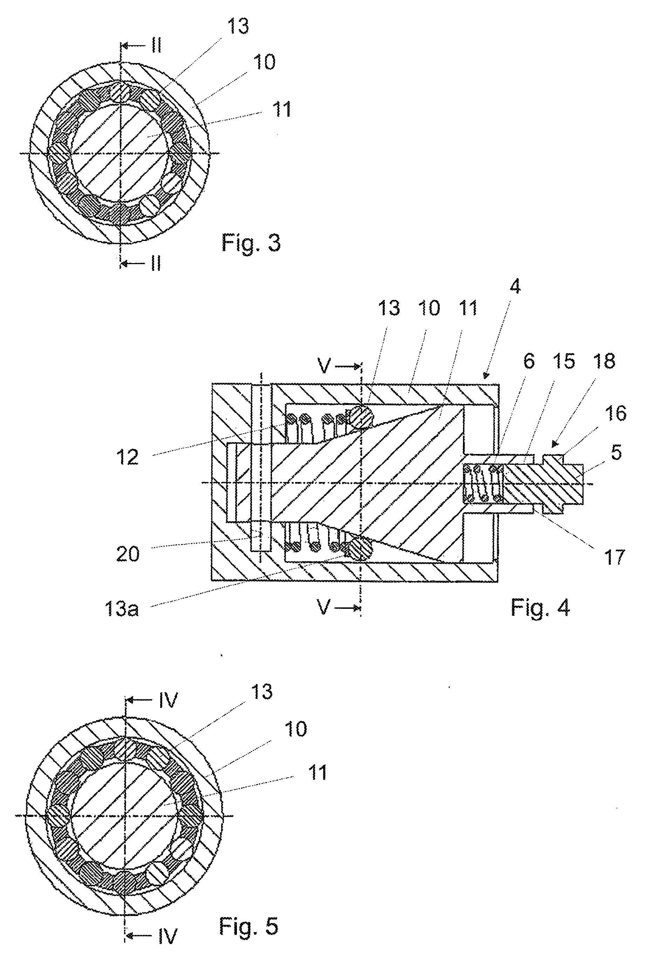

Wie sich aus Fig. 2 und Fig. 4 ergibt, weist der Kegelbolzen 11 eine ringförmige Verlängerung 15 auf, welche zur axialen Führung des Druckbolzens 5 dient und welche außerdem die Druckfeder 6 aufnimmt. Die Druckfeder 6 ist somit zwischen den einander zugewandten Enden bzw. Stirnflächen des Druckbolzens 6 und des Kegelbolzens 11 in den durch die ringförmige Verlängerung 15 gebildeten Innenraum eingesetzt.

Eine Wegbegrenzung des Druckbolzens 5 erfolgt dadurch, dass der Druckbolzen 5 einen ringförmig umlaufenden Bund 16 aufweist, welcher sich an einer ringförmigen Stirnfläche 17 der Verlängerung 15 anschlägt. Dadurch wird ein Endanschlag 18 zur Wegbegrenzung des Druckbolzens 5 ausgebildet. Der Endanschlag 18 kann als fester Endanschlag ausgebildet sein. Der durch den Druckbolzen 5 und den Kegelbolzen 11 1 gebildete Endanschlag 18 kann jedoch auch durch die Funktion eines elastischen Dämpferelements ergänzt werden. Hierzu kann vorzugsweise ein Elastomer, eine Feder oder dergleichen eingesetzt werden.

Wie sich ferner aus den Figuren 2 bis 5 ergibt, ist der Kegelbolzen 11 in dem Stutzen 10 axial verschieblich aufgenommen. Der Kegelbolzen 11 weist dabei einen Abschnitt mit einem sich verjüngenden Querschnitt auf, wobei sich der Abschnitt in eine von dem Druckbolzen 5 abgewandte Richtung verjüngt. Die Nachstellfeder 12 ist dabei derart angeordnet, dass sich diese mit einem Ende an dem sich verjüngenden Abschnitt des Kegelbolzens 11 abstützt und mit dem anderen Ende an einem Bodenteil des Stutzens 10 oder einem geeigneten Vorsprung aufliegt. Die Nachstellfeder 12 beaufschlagt den Kegelbolzen 11 über den sich verjüngenden Abschnitt mit einer Kraft, die axial in Richtung auf den Druckbolzen 5 wirkt. Dabei ist im Ausführungsbeispiel vorzugsweise vorgesehen, dass die Nachstellfeder 12 nicht direkt auf den sich verjüngenden Abschnitt des Kegelbolzens drückt, sondern zunächst auf den Kugelkäfig 13, welcher an dem sich verjüngenden Abschnitt des Kegelbolzens und einer Innenwandung des Stutzens 10 anliegt. Die Nachstellfeder 12 drückt somit den Kugelkäfig 13 in einen sich verjüngenden ringförmigen Spalt zwischen dem Kegelbolzen 11 und der Innenwandung des Stutzens. Dadurch wird eine Selbsthemmung des Kegelbolzens 11 erreicht, d. h. der Kegelbolzen 11 kann sich nicht in eine von dem Druckbolzen 5 abgewandte Richtung bewegen, da dies zu einer Klemmung des Kugelkäfigs 13 zwischen dem sich verjüngenden Abschnitt des Kegelbolzens 11 und der Innenwandung des Stutzens 10 führt. Eine Kraft, die auf den Kegelbolzen 11 in eine von dem Druckbolzen 5 abgewandte Richtung wirkt, wird somit vom Kegelbolzen 11 in den Kugelkäfig 13 und von dort in den Stutzen 10 eingeleitet.

Zwischen der Nachstellfeder 12 und dem Kugelkäfig 13 ist eine vorzugsweise ringförmige Anlagefläche 13a ausgebildet. Diese kann beispielsweise als separates Einlegeteil oder einstückig mit der Nachstellfeder 12 oder dem Kugelkäfig 13 ausgebildet sein.

Durch die Kraft der Nachstellfeder 12 ist die Druckfeder 6 für das Grundspiel leicht vorgespannt. Es verbleibt jedoch ein definierter Restfederweg. Wird kein oder nur ein geringes Drehmoment vom Getriebe übertragen, sind die Verzahnungsabweisungskräfte in Richtung Vorspannungseinrichtung 4 so gering, dass die Druckfeder 6 für das Grundspiel wirksam ist und zum Beispiel eine Temperaturausdehnung sowie Rundlauftoleranzen kompensiert.

Sobald das zu übertragende Drehmoment einen bestimmten Wert überschreitet, sind die Verzahnungsabweisungskräfte so groß, dass die maximal zu übertragende Kraft der Druckfeder 6 für das Grundspiel überschritten wird und sich der Druckbolzen 5 über den Kegelbolzen 11 und den Kugelkäfig 13 am Stutzen 10 abstützt. Dadurch wird gewährleistet, dass der Weg des Schraubritzels 2 in diese Richtung (Abweisrichtung) begrenzt wird.

Die Nachstellung des Kegelbolzens 11 aufgrund eines Verschleißes oder eines Setzens in den Verzahnungskomponenten wird dadurch erreicht, dass zwischen dem Stutzen 10 und dem Kegelbolzen 11 der bereits beschriebene Kugelkäfig 13 oder eine ähnliche Einrichtung angeordnet ist. Die Nachstellfeder 12 sorgt dabei für die axiale Klemmung zwischen dem Kegelbolzen 11 und dem Stutzen 10. Die Axialkräfte werden über die Selbsthemmung des Kegelbolzens 11 und des Kugelkäfigs 13 am Stutzen 10 abgestützt.

Die Kraft der Nachstellfeder 12 sorgt für eine kontinuierliche Nachstellung des Kegelbolzens 11 in Richtung Schraubrad 3, sobald die Druckfeder 6 für das Grundspiel, zum Beispiel aufgrund von Setzen oder Verschleiß in den Verzahnungskomponenten, nicht mehr in der Lage ist, eine definierte Anfederkraft aufzubringen. Damit wird sichergestellt, dass die Anfederkraft durch die Vorspannungseinrichtung 4 über die gesamte Betriebsdauer des Getriebes nahezu konstant bleibt.

Fig. 2 zeigt eine besonders geeignete Transportsicherung 19, durch welche die Vorspannung der Nachstellfeder 12 nach der Montage der Vorspannungseinrichtung 4 aufrechterhalten wird. Die Transportsicherung ist im Ausführungsbeispiel durch einen Stift 19 realisiert, der in einer Bohrung 20 zwischen dem Kegelbolzen 11 und dem Stutzen 10 eingreift und die Vorspannung bis zur endgültigen Montage der Vorspannungseinrichtung 4 im Servogehäuse 14 aufrecht erhält.

### Bezugszeichenliste

- 1: Schraubradgetriebe
- 2: Schraubritzel
- 3: Schraubrad
- 4: Vorspannungseinrichtung
- 5: Druckstück
- 6: Druckfeder
- 7: Festlager (Wälzlager)
- 8: Loslager (Wälzlager)
- 9: Lagerbuchse
- 10: Gehäuseteil/Stutzen
- 11 1: Nachstellglied/Kegelbolzen
- 12: Nachstellfeder
- 13: Kugelkäfig
- 13a: Anlagefläche
- 14: Gehäuse
- 15: ringförmige Verlängerung
- 16: Bund des Druckstücks
- 17: Stirnfläche der ringförmigen Verlängerung
- 18: Endanschlag
- 19: Transportsicherung
- 20: Bohrung

## Patentansprüche

1. Schraubradgetriebe (1) für eine Lenkung eines Kraftfahrzeugs, mit einem Schraubritzel (2), welches in ein Schraubrad (3) eingreift, wobei eine Vorspannungseinrichtung (4)
• mit einem vorgespannten Druckstück (5) vorgesehen ist, welches das Schraubritzel (2) in eine Verzahnung des Schraubrads (3) drückt, wobei die Vorspanneinrichtung (4) folgende Merkmale aufweist:
• ein Gehäuseteil (10), in dem ein Nachstellglied (11) axial verschiebbar aufgenommen ist,
• eine Nachstellfeder (12),
• einen Kugelkäfig (13) oder eine Einrichtung mit vergleichbaren Roll- oder Gleiteigenschaften,
**dadurch gekennzeichnet, dass**
a) das Nachstellglied (11) einen Abschnitt mit einem sich verjüngenden Querschnitt aufweist, wobei sich der Abschnitt in eine von dem Druckstück (5) abgewandte Richtung verjüngt,
b) die Nachstellfeder (12) zwischen dem sich verjüngenden Abschnitt des Nachstellglieds (11) und dem Gehäuseteil (10) angeordnet ist und die das Nachstellglied (11) axial in Richtung auf das Druckstück (5) mit einer Kraft beaufschlagt, und
c) der Kugelkäfig (13) oder die Einrichtung mit vergleichbaren Roll- oder Gleiteigenschaften an dem sich verjüngenden Abschnitt des Nachstellglieds (11) und einer Innenwandung des Gehäuseteils (10) anliegt, wobei sich das Nachstellglied (11) über den Kugelkäfig (13) oder die vergleichbare Einrichtung im Gehäuseteil (10) derart abstützt, dass eine Bewegung des Nachstellglieds (11) in eine von dem Druckstück (5) abgewandte Richtung gehemmt ist.

2. Schraubradgetriebe nach Anspruch 1, **dadurch gekennzeichnet, dass** ein Ende des Schraubritzels (2) in einem Loslager (8) gelagert ist.

3. Schraubradgetriebe nach Anspruch 2, **dadurch gekennzeichnet, dass** die Vorspannungseinrichtung (4) das Schraubritzel (2) über das Loslager (8) in die Verzahnung des Schraubrads (3) drückt.

4. Schraubradgetriebe nach Anspruch 1, 2 oder 3, **dadurch gekennzeichnet, dass** das Druckstück (5) vorgespannt und axial verschieblich im Nachstellglied (11) gelagert ist.

5. Schraubradgetriebe nach Anspruch 1 bis 4, **dadurch gekennzeichnet, dass** das Nachstellglied als Kegelbolzen (11) ausgebildet ist und eine ringförmige Verlängerung (15) zur axialen Führung des Druckstücks (5) aufweist.

6. Schraubradgetriebe nach Anspruch 5, **dadurch gekennzeichnet, dass** der Kegelbolzen (11) und das Druckstück (5) einen Endanschlag (18) zur Wegbegrenzung des Druckstücks (5) ausbilden.

7. Schraubradgetriebe nach Anspruch 6, **dadurch gekennzeichnet**, der Endanschlag (18) ein elastisches Dämpferelement aufweist.

8. Schraubradgetriebe nach einem der Ansprüche 1 bis 7, **dadurch gekennzeichnet, dass** eine Transportsicherung (19) vorgesehen ist, durch welche die Vorspannung der Nachstellfeder (12) fixierbar ist.

9. Schraubradgetriebe nach einem der Ansprüche 1 bis 8, **dadurch gekennzeichnet, dass** das Schraubradgetriebe (1) als Schneckengetriebe ausgebildet ist, wobei das Schraubrad (3) als Schneckenrad und das Schraubritzel (2) als Schnecke ausgebildet ist und wobei die Schnecke mit dem Schneckenrad in Eingriff steht.

10. Elektrische Hilfskraftlenkung für Kraftfahrzeuge mit einem Schraubradgetriebe (1) nach einem der Ansprüche 1 bis 9.

## Claims

1. Helical gear mechanism (1) for a steering system of a motor vehicle, having a helical pinion (2) which engages into a helical gear (3), wherein a preload device (4)
• is provided which has a preloaded thrust piece (5) which pushes the helical pinion (2) into a toothing of the helical gear (3), wherein the preload device (4) has the following features:
• a housing part (10) in which a readjustment element (11) is held in an axially displaceable manner,
• a readjustment spring (12),
• a ball cage (13) or a device with similar rolling or sliding properties,
**characterized in that**
a) the readjustment element (11) has a portion with a tapering cross section, wherein the portion tapers in a direction facing away from the thrust piece (5),
b) the readjustment spring (12) is arranged between the tapering portion of the readjustment element (11) and the housing part (10) and loads the readjustment element (11) with a force axially in the direction of the thrust piece (5), and
c) the ball cage (13) or the device with similar rolling or sliding properties bears against the tapering portion of the readjustment element (11) and an inner wall of the housing part (10), wherein the readjustment element (11) is supported by means of the ball cage (13) or the similar device in the housing part (10) in such a way that a movement of the readjustment element (11) in a direction facing away from the thrust piece (5) is inhibited.

2. Helical gear mechanism according to Claim 1, **characterized in that** one end of the helical pinion (2) is mounted in a floating bearing (8).

3. Helical gear mechanism according to Claim 2, **characterized in that** the preload device (4) pushes the helical pinion (2) via the floating bearing (8) into the toothing of the helical gear (3).

4. Helical gear mechanism according to Claim 1, 2 or 3, **characterized in that** the thrust piece (5) is mounted in a preloaded and axially displaceable manner in the readjustment element (11).

5. Helical gear mechanism according to Claims 1 to 4, **characterized in that** the readjustment element is in the form of a conical stud (11) and has an annular extension (15) for the axial guidance of the thrust piece (5).

6. Helical gear mechanism according to Claim 5, **characterized in that** the conical stud (11) and the thrust piece (5) form an end stop (18) for limiting the travel of the thrust piece (5).

7. Helical gear mechanism according to Claim 6, **characterized in that** the end stop (18) has an elastic damper element.

8. Helical gear mechanism according to one of Claims 1 to 7, **characterized in that** a transport lock (19) is provided, by means of which the preload of the readjustment spring (12) can be fixed.

9. Helical gear mechanism according to one of Claims 1 to 8, **characterized in that** the helical gear mechanism (1) is in the form of a worm gear mechanism, wherein the helical gear (3) is in the form of a worm gear and the helical pinion (2) is in the form of a worm, and wherein the worm is in engagement with the worm gear.

10. Electric power steering system for motor vehicles, having a helical gear mechanism (1) according to one of Claims 1 to 9.

## Revendications

1. Engrenage hypoïde (1) pour une direction d'un véhicule automobile, comprenant un pignon hélicoïdal (2) qui vient en prise dans une roue hypoïde (3), un dispositif de précontrainte (4)
- étant pourvu d'une pièce de pression (5) précontrainte qui presse le pignon hélicoïdal (2) dans une denture de la roue hypoïde (3), le dispositif de précontrainte (4) présentant les caractéristiques suivantes :
- une partie de boîtier (10) dans laquelle est reçu de manière déplaçable axialement un organe de rattrapage (11),
- un ressort de rattrapage (12),
- une cage à billes (13) ou un dispositif ayant des propriétés de roulement ou de glissement comparables,
**caractérisé en ce que**
a) l'organe de rattrapage (11) présente une portion avec une section transversale se rétrécissant, la portion se rétrécissant dans une direction opposée à la pièce de pression (5),
b) le ressort de rattrapage (12) est disposé entre la portion se rétrécissant de l'organe de rattrapage (11) et la partie de boîtier (10), et sollicite l'organe de rattrapage (11) avec une force axialement dans la direction de la pièce de pression (5), et
c) la cage à billes (13) ou le dispositif ayant des caractéristiques de roulement ou de glissement comparables s'applique contre la portion se rétrécissant de l'organe de rattrapage (11) et contre une paroi interne de la partie de boîtier (10), l'organe de rattrapage (11) s'appuyant par le biais de la cage à billes (13) ou du dispositif comparable dans la partie de boîtier (10), de telle sorte qu'un mouvement de l'organe de rattrapage (11) dans une direction opposée à la pièce de pression (5) soit empêché.

2. Engrenage hypoïde selon la revendication 1, **caractérisé en ce qu'**une extrémité du pignon hélicoïdal (2) est montée dans un palier fou (8).

3. Engrenage hypoïde selon la revendication 2, **caractérisé en ce que** le dispositif de précontrainte (4) presse le pignon hélicoïdal (2) par le biais du palier fou (8) dans la denture de la roue hypoïde (3).

4. Engrenage hypoïde selon la revendication 1, 2 ou 3, **caractérisé en ce que** la pièce de pression (5) est montée de manière précontrainte et déplaçable axialement dans l'organe de rattrapage (11).

5. Engrenage hypoïde selon les revendications 1 à 4, **caractérisé en ce que** l'organe de rattrapage est réalisé sous forme de boulon conique (11) et présente un prolongement annulaire (15) pour le guidage axial de la pièce de pression (5).

6. Engrenage hypoïde selon la revendication 5, **caractérisé en ce que** le boulon sphérique (11) et la pièce de pression (5) constituent une butée de fin de course (18) pour la limitation de la course de la pièce de pression (5).

7. Engrenage hypoïde selon la revendication 6, **caractérisé en ce que** la butée de fin de course (18) présente un élément amortisseur élastique.

8. Engrenage hypoïde selon l'une quelconque des revendications 1 à 7, **caractérisé en ce qu'**il est prévu une fixation pour le transport (19), qui permet de fixer la précontrainte du ressort de rattrapage (12).

9. Engrenage hypoïde selon l'une quelconque des revendications 1 à 8, **caractérisé en ce que** l'engrenage hypoïde (1) est réalisé sous forme d'engrenage à vis sans fin, la roue hypoïde (3) étant réalisée sous forme de roue à denture hélicoïdale et le pignon hélicoïdal (2) étant réalisé sous forme de vis sans fin, la vis sans fin étant en prise avec la roue à denture hélicoïdale.

10. Direction assistée électrique pour véhicules automobiles, comprenant un engrenage hypoïde (1) selon l'une quelconque des revendications 1 à 9.
